# EUROPEAN PATENT APPLICATION

(11) **EP 4 082 650 A1**
(43) Date of publication of application: **02.11.2022**
(21) Application number: 20905722.3
(22) Date of filing: 23.12.2020
(51) Int. Cl.: B01D 53/44, B01D 53/04, B01D 53/82, B01D 53/96

(54) **ORGANIC SOLVENT RECOVERY SYSTEM**

(30) Priority: 25.12.2019 JP 2019234253
(71) Applicant: TOYOBO CO., LTD., Osaka-shi Osaka 5300001 (JP)
(72) Inventor: OKADA Takemasa, Otsu-shi, Shiga 520-0292 (JP)
(74) Representative: Vossius & Partner Patentanwälte Rechtsanwälte mbB
(86) International application number: PCT/JP2020/048198
(87) International publication number: WO 2021/132347

(57) **Abstract**

An organic solvent recovery system of the present invention includes: a circulation channel for circulating a carrier gas; an adsorption/desorption processing device; a condensation recovery device that condenses an organic solvent in the carrier gas; a heating unit that heats the carrier gas; and a cooling entrance channel that introduces the carrier gas from the condensation recovery device to an adsorption/desorption element not via the heating unit, in which the adsorption/desorption processing device, after performing adsorption with the adsorption/desorption element by introduction of a treatment target gas, performs desorption by introduction of the heated carrier gas, after that, cools the adsorption/desorption element by introduction of the carrier gas at low temperature from the cooling entrance channel, and after that, again performs adsorption by introduction of the treatment target gas, and the condensation recovery device includes a melting unit that temporarily heats and melts a component frozen by cooling of the carrier gas.

## Description

### TECHNICAL FIELD

The present invention relates to an organic solvent recovery system that, from a treatment target gas containing an organic solvent, separates the organic solvent and recovers the separated organic solvent by using a carrier gas.

### BACKGROUND ART

There has been known an organic-solvent-containing-gas processing system capable of cleaning a treatment target gas and recovering an organic solvent by performing an adsorption process and a desorption process for the organic solvent on the treatment target gas containing the organic solvent by using an adsorbent and thereby transferring the organic solvent from the treatment target gas to a carrier gas.

An organic solvent recovery system of this kind, in general, includes an adsorption/desorption processing device that temporally alternately brings a treatment target gas containing an organic solvent and a carrier gas at high temperature in contact with an adsorbent and a condensation recovery device that cools the carrier gas discharged from the adsorption/desorption processing device to condense and recover the organic solvent. As one of such organic solvent recovery systems, PTL 1 discloses an organic-solvent-containing-gas processing system that uses water vapor as a carrier gas.

Nowadays, organic solvent recovery systems with low drainage are desired that aims at recovering organic solvents with high quality and simplifying the wastewater processing process, and PTL 2 discloses an organic solvent recovery system that uses an inert gas heated to high temperature as a carrier gas. PTL 3 discloses an organic solvent recovery system that uses an inert gas heated to high temperature as a carrier gas and circulates the inert gas in the organic solvent recovery system to reduce the usage of the inert gas.

### CITATION LIST

### PATENT LITERATURE

PTL 1: Japanese Utility Model Laying-Open No. 3-32924
PTL 2: Japanese Patent Laying-Open No. 7-68127
PTL 3: Japanese Patent No. 5482776

### SUMMARY OF INVENTION

### TECHNICAL PROBLEM

To improve cleaning performance for the treatment target gas and recovery efficiency for the organic solvent in such an organic solvent recovery system, it is necessary to sufficiently desorb the organic solvent, in other words, regenerate the adsorbent, in the desorption process. In addition, to reduce the running cost of the organic solvent recovery system, it is preferable to have a configuration that reuses the used carrier gas by circulating it in the organic solvent recovery system.

However, it is difficult to completely separate the organic solvent from the carrier gas in a condensation recovery device. Thus, the carrier gas discharged from the condensation recovery device contains an uncondensed organic solvent. Hence, in the case of the configuration that circulates the carrier gas and returns it to the adsorption/desorption processing device, regeneration of adsorbent is insufficient. Thus, there is a problem in that improvement in cleaning performance for the treatment target gas and recovery efficiency for the organic solvent is limited by nature.

Meanwhile, PTL 3 includes a second adsorption/desorption processing device that adsorbs and removes the organic solvent from the carrier gas containing an uncondensed organic solvent discharged from the condensation recovery device, and this improves cleaning performance for the treatment target gas and recovery efficiency for the organic solvent. However, the second adsorption/desorption processing device charged with a second adsorption/desorption element, temperature adjustment means for adjusting the temperature of the carrier gas to a high temperature state to desorb the organic solvent from the second adsorption/desorption element, and the like are required to be provided on the circulation channel of the carrier gas. This causes problems of making the system configuration more complicated and increasing its size.

Hence, the present invention has been made to solve the above problems, and an object thereof is to provide an organic solvent recovery system in which the running cost can be reduced, cleaning performance for the treatment target gas and recovery efficiency for the organic solvent are improved, and it is possible to simplify the system configuration and reduce its size.

### SOLUTION TO PROBLEM

The inventors of the present invention studied intensely, found that the measures shown below solve the above problems, and achieved the present invention. Specifically, the present invention includes the following configurations.
1. An organic solvent recovery system that, from a treatment target gas containing an organic solvent, separates and recovers the organic solvent, the organic solvent recovery system including: a circulation channel through which a carrier gas circulates and flows; an adsorption/desorption processing device that is provided on the circulation channel, has an adsorption/desorption element, and performs adsorption of the organic solvent and desorption of the organic solvent alternately, the adsorption of the organic solvent being performed by introducing the treatment target gas to the adsorption/desorption processing device, the desorption of the organic solvent being performed by introducing the carrier gas to the adsorption/desorption processing device; a condensation recovery device that is provided downstream of the adsorption/desorption processing device on the circulation channel, includes a cooling unit configured to cool the carrier gas discharged from the adsorption/desorption processing device, and condenses the organic solvent in the carrier gas in the cooling unit to recover the organic solvent as a condensed liquid; a heating unit that is provided upstream of the adsorption/desorption processing device on the circulation channel and heats the carrier gas at low temperature discharged from the condensation recovery device; and a cooling entrance channel that is provided on the circulation channel and introduces the carrier gas at low temperature discharged from the condensation recovery device to the adsorption/desorption element not via the heating unit, in which the adsorption/desorption processing device, after introducing the treatment target gas to the adsorption element, introduces the carrier gas heated by the heating unit to the adsorption element, after that, introduces the carrier gas at low temperature from the cooling entrance channel to the adsorption element, and after that, again introduces the treatment target gas to the adsorption element, and the condensation recovery device includes a melting unit that temporarily heats and melts a component frozen by cooling of the carrier gas.

With the above configuration, since the component frozen by cooling of the carrier gas is temporarily heated and melted by the melting unit, it is possible to solve the problem in the gas flow due to adhesion of the frozen component. The organic solvent recovery system with the above configuration can cool the carrier gas at a lower temperature than conventional systems, and it is possible to increase the efficiency in condensation recovery of the organic solvent. In addition, this decreases the concentration of the organic solvent in the carrier gas discharged from the condensation recovery device and increases the efficiency in desorption of the carrier gas in the adsorption processing device, and this eliminates the need for having another second adsorption/desorption processing device downstream of the condensation recovery device. Further, after adsorption is performed with the adsorption/desorption element, desorption is performed by introducing the heated carrier gas to the adsorption/desorption element. After that, the adsorption/desorption element is cooled by introducing the carrier gas from the cooling entrance channel. After that, adsorption is performed with the adsorption/desorption element. Thus, since introduction of the carrier gas cools the heated adsorption/desorption element, the adsorption with the adsorption/desorption element can adsorb the organic solvent in the treatment target gas efficiently, improving cleaning performance for the treatment target gas.

As described above, the organic solvent recovery system of the present invention can reduce the running cost and improve cleaning performance for the treatment target gas and recovery efficiency for the organic solvent, and further, makes it possible to simplify the system configuration and reduce its size.

2. The organic solvent recovery system according to above 1, in which the condensation recovery device includes a cooling-medium heating-medium supply unit that selectively supplies a cooling medium or a heating medium, and the cooling unit and the melting unit are configured as one cooling melting unit, and when the cooling melting unit is supplied with the cooling medium from the cooling-medium heating-medium supply unit, the cooling melting unit functions as the cooling unit, and when the cooling melting unit is supplied with the heating medium from the cooling-medium heating-medium supply unit, the cooling melting unit functions as the melting unit.

With the above configuration, since the heating medium is temporarily supplied to the cooling melting unit which served as a cooling source, so that the frozen component can be heated efficiently, it is possible to melt the frozen component in a short time

3. The organic solvent recovery system according to above 2, including a static pressure difference measurement unit that measures a difference in static pressure of the carrier gas between at an inlet side and at an outlet side of the condensation recovery device, in which the cooling-medium heating-medium supply unit, when the difference in the static pressure measured by the static pressure measurement unit exceeds a specified value, selects supplying of the heating medium.

Since the above configuration makes it possible to detect a problem in the gas flow due to adhesion of the frozen component by using measurement results of the static pressure difference measurement unit, it is possible to automatically heat and melt the frozen component by switching to the heating medium supply.

4. The organic solvent recovery system according to any one of above 1 to 3, including: a vapor-pressure measurement unit that measures vapor pressure of the organic solvent contained in the carrier gas discharged from the condensation recovery device; and a temperature adjustment unit that adjusts temperature of the cooling unit such that the vapor pressure of the organic solvent measured by the vapor-pressure measurement unit is no more than a specified value.

With the above configuration, since adjustment of the temperature of the cooling unit makes it possible to make the concentration of the organic solvent in the discharged carrier gas no more than a certain value, it is possible to desorb the organic solvent adsorbed in the adsorption/desorption element efficiently.

5. The organic solvent recovery system according to any one of above 1 to 4, in which while the melting unit is performing the melting, the carrier gas is passed through the cooling entrance channel not via the heating unit and supplied to the condensation recovery device.

With the above configuration, since the carrier gas is introduced to the condensation recovery device via the cooling entrance channel in the melting, it is possible to liquefy and recover the melted component efficiently by carrying it on the carrier gas.

6. The organic solvent recovery system according to any one of above 1 to 5, in which the adsorption/desorption processing device performs a purge process on the adsorption/desorption element after the adsorption and before the desorption, and the melting unit performs the melting during a period of the purge process.

With the above configuration, since the melting is performed during the period of the purge process, and the adsorption/desorption process is not stopped to perform the melting, the operation of the system is efficient.

7. The organic solvent recovery system according to any one of above 1 to 6, in which the carrier gas heated by the heating unit and the carrier gas from the cooling entrance channel come in contact with the adsorption/desorption element in counter-flow directions.

With the above configuration, it is possible to effectively perform desorption by heating the adsorption/desorption element and cooling of the adsorption/desorption element.

### ADVANTAGEOUS EFFECTS OF INVENTION

With the present invention, since the component frozen by cooling of the carrier gas is temporarily heated and melted by the melting unit, it is possible to solve the problem in the gas flow due to adhesion of the frozen component. The organic solvent recovery system with the above configuration can cool the carrier gas at a lower temperature than conventional systems, and it is possible to increase the efficiency in condensation recovery of the organic solvent. In addition, this decreases the concentration of the organic solvent in the carrier gas discharged from the condensation recovery device and increases the efficiency in desorption of the carrier gas in the adsorption processing device, and this eliminates the need for having another second adsorption/desorption processing device downstream of the condensation recovery device. Further, after adsorption is performed with the adsorption/desorption element, desorption is performed by introducing the heated carrier gas to the adsorption/desorption element. After that, the adsorption/desorption element is cooled by introducing the carrier gas from the cooling entrance channel. After that, adsorption is performed with the adsorption/desorption element. Thus, since introduction of the carrier gas cools the heated adsorption/desorption element, the adsorption with the adsorption/desorption element can adsorb the organic solvent in the treatment target gas efficiently, improving cleaning performance for the treatment target gas.

As described above, the organic solvent recovery system of the present invention can reduce the running cost and improve cleaning performance for the treatment target gas and recovery efficiency for the organic solvent, and further, makes it possible to simplify the system configuration and reduce its size.

### BRIEF DESCRIPTION OF DRAWINGS

Fig. 1 is a diagram illustrating the structure of an organic solvent recovery system in Embodiment 1.
Fig. 2 is a diagram of a time chart illustrating a temporal switching of an adsorption process and a desorption process using a pair of adsorption/desorption elements in the organic solvent recovery system of the embodiments.

### DESCRIPTION OF EMBODIMENTS

Hereinafter, embodiments of the present invention will be described in detail with reference to the figures. Note that in the following embodiments, the same or common portions are denoted by the same symbols in the figures, and description thereof will not be repeated.

### (Embodiment)

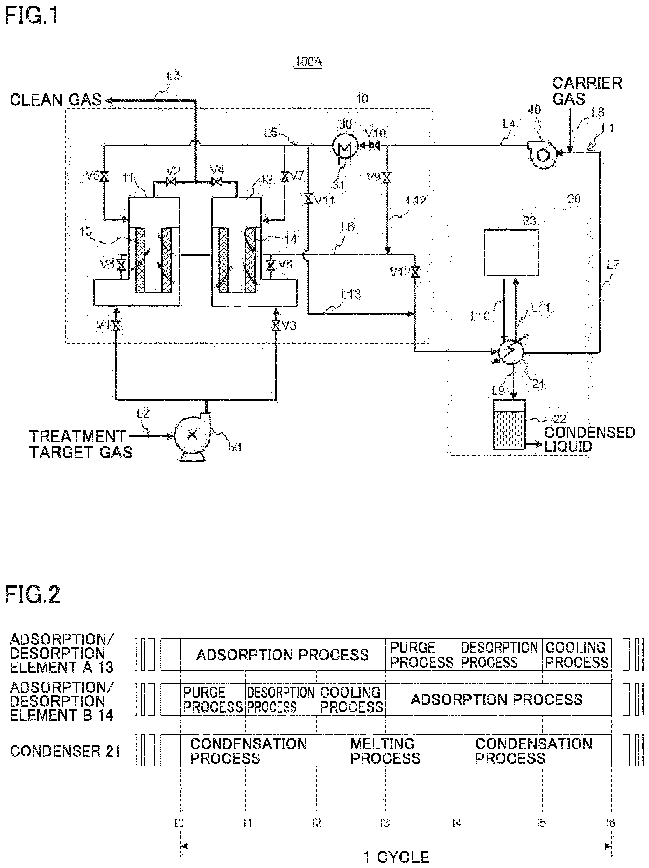

As illustrated in Fig. 1, an organic solvent recovery system 100A in the present embodiment includes a circulation channel L1 through which a carrier gas flows so as to circulate and an adsorption/desorption processing device 10, a condensation recovery device 20, and a circulation blower 40 that are provided on circulation channel L1. Organic solvent recovery system 100A further includes a treatment-target-gas blower 50 that supplies a treatment target gas to adsorption/desorption processing device 10.

Various kinds of gas can be used for the carrier gas, such as water vapor, heated air, and an inert gas heated to high temperature. In particular, use of an inert gas that is a gas not containing water makes the configuration of organic solvent recovery system 100A simpler.

Circulation channel L1 includes pipe lines L4 to L7 illustrated in the figure, a cooling entrance channel L12, and a cooling exit channel L13. Circulation blower 40 is blowing means for making the carrier gas flow through circulation channel L1. Treatment-target-gas blower 50 is blowing means for introducing the treatment target gas to adsorption/desorption processing device 10.

Adsorption/desorption processing device 10 includes adsorption/desorption tanks A 11 and B 12 and a heater 30. Adsorption/desorption tank A 11 is charged with adsorption/desorption element A 13 that adsorbs and desorbs organic solvents, and adsorption/desorption tank B 12 is charged with adsorption/desorption element B 14 that adsorbs and desorbs organic solvents. Although the present embodiment includes two adsorption/desorption tanks, the number of adsorption/desorption tanks may be one or three or more.

Heater 30 adjusts the temperature of the carrier gas (heats the carrier gas) to be supplied to adsorption/desorption tank A 11 or adsorption/desorption tank B 12 to a high temperature state. More specifically, heater 30 adjusts the temperature of the carrier gas discharged from condensation recovery device 20 and passed through circulation blower 40 to a high temperature state and supplies it to adsorption/desorption tank A 11 or adsorption/desorption tank B 12. Here, heater 30 adjusts the temperature of the carrier gas to be introduced to adsorption/desorption tank A 11 and adsorption/desorption tank B 12 such that adsorption/desorption element A 13 and adsorption/desorption element B 14 can be kept at a specified desorption temperature.

Adsorption/desorption element A 13 and adsorption/desorption element B 14 come in contact with the treatment target gas and adsorb the organic solvent and part of the water contained in the treatment target gas. Thus, in adsorption/desorption processing device 10, the treatment target gas is supplied to adsorption/desorption tank A 11 or adsorption/desorption tank B 12, and the organic solvent and trace water are adsorbed by adsorption/desorption element A 13 or adsorption/desorption element B 14. The organic solvent is removed from the treatment target gas, and thus the treatment target gas is cleaned. The clean gas is discharged from adsorption/desorption tank A 11 or adsorption/desorption tank B 12.

Adsorption/desorption element A 13 and adsorption/desorption element B 14 come in contact with the carrier gas at high temperature and desorb the adsorbed organic solvent and trace water. Thus, in adsorption/desorption processing device 10, the carrier gas at high temperature is supplied to adsorption/desorption tank A 11 or adsorption/desorption tank B 12, the organic solvent and trace water are desorbed from adsorption/desorption element A 13 or adsorption/desorption element B 14, and the carrier gas containing the organic solvent and water is discharged from adsorption/desorption tank A 11 or adsorption/desorption tank B 12.

Adsorption/desorption element A 13 and adsorption/desorption element B 14 include an adsorbent containing one material out of granular activated carbon, activated carbon fiber, zeolite, silica gel, porous polymer, and metal-organic framework. Preferably, activated carbon or zeolite in the form of granules, powder, honeycomb, or the like is used, and more preferably activated carbon fiber is used. Activated carbon fiber has a fibrous structure having micropores on its surface, and its efficiency of contact with gas is high. Thus, it is possible to achieve a higher adsorption efficiency than other adsorbents.

In addition, activated carbon fiber has a higher adsorption selectivity for organic solvents than activated carbon in the form of granules, powder, honeycomb, or the like and thus adsorbs almost no water contained in the treatment target gas. As a result, the amount of water contained in the carrier gas discharged from adsorption/desorption tank A 11 or adsorption/desorption tank B 12 of adsorption/desorption processing device 10 is extremely small. This makes it possible to make the configuration of the organic solvent recovery system 100A simpler and possible to downsize the organic solvent recovery system. In the case of using an adsorption/desorption element having a low adsorption selectivity for organic solvents, it adsorbs a large amount of water contained in the treatment target gas. Thus, the amount of water contained in the carrier gas discharged from adsorption/desorption tank A 11 and adsorption/desorption tank B 12 of adsorption/desorption processing device 10 is large, and wastewater containing the organic solvent is discharged from the organic solvent recovery system 100A. This makes a separate wastewater process necessary.

Pipe lines L2 and L3 are connected to adsorption/desorption processing device 10. Pipe line L2 is a pipe line for supplying the treatment target gas containing an organic solvent and water to adsorption/desorption tank A 11 or adsorption/desorption tank B 12 via treatment-target-gas blower 50. From pipe line L2, the state of connection/non-connection to adsorption/desorption tank A 11 is switched by a valve V1, and the state of connection/non-connection to adsorption/desorption tank B 12 is switched by a valve V3. Pipe line L3 is a pipe line for discharging the clean gas from adsorption/desorption tank A 11 or adsorption/desorption tank B 12. From pipe line L3, the state of connection/non-connection to adsorption/desorption tank A 11 is switched by a valve V2, and the state of connection/non-connection to adsorption/desorption tank B 12 is switched by a valve V4.

Further, pipe lines L5 and L6 are connected to adsorption/desorption processing device 10. Pipe line L5 is a pipe line for supplying the carrier gas to adsorption/desorption tank A 11 or adsorption/desorption tank B 12 via heater 30 or for discharging the carrier gas from adsorption/desorption tank A 11 or adsorption/desorption tank B 12. From pipe line L5, the state of connection/nonconnection to adsorption/desorption tank A 11 is switched by a valve V5, and the state of connection/non-connection to adsorption/desorption tank B 12 is switched by a valve V7. Pipe line L6 is a pipe line for discharging the carrier gas from adsorption/desorption tank A 11 or adsorption/desorption tank B 12 or for supplying the carrier gas to adsorption/desorption tank A 11 or adsorption/desorption tank B 12 via cooling entrance channel L12. From pipe line L6, the state of connection/nonconnection to adsorption/desorption tank A 11 is switched by a valve V6, and the state of connection/non-connection to adsorption/desorption tank B 12 is switched by a valve V8.

Condensation recovery device 20 includes a condenser 21, a recovery tank 22, and a cooling-medium/heating-medium supply unit 23. Condenser 21 adjusts the temperature of the carrier gas at high temperature discharged from adsorption/desorption tank A 11 or adsorption/desorption tank B 12 to a low temperature state to condense the organic solvent and trace water contained in the carrier gas. Specifically, condenser 21 indirectly cools the carrier gas by using a cooling medium such as an antifreeze to liquefy the organic solvent and trace water. Recovery tank 22 is used to store the organic solvent and trace water liquefied by condenser 21 as a condensed liquid. Note that recovery tank 22 and cooling-medium/heating-medium supply unit 23 may be provided outside condensation recovery device 20.

Cooling-medium/heating-medium supply unit 23 is for supplying a cooling medium or a heating medium to condenser 21 temporally alternately. In summary, condensation recovery device 20 performs a condensation process (cooling medium supply) and a melting process (heating medium supply), the condensation process including supplying the cooling medium from cooling-medium/heating-medium supply unit 23, indirectly cooling in condenser 21 the carrier gas discharged from adsorption/desorption processing device 10 and containing the organic solvent and trace water, and adjusting the temperature of the carrier gas to a low temperature state to condense the organic solvent and trace water, the melting process including supplying the heating medium from cooling-medium/heating-medium supply unit 23 and indirectly heating and melting water and the organic solvent (frozen component) coagulated in condenser 21. Since the melting process can effectively heat the frozen component by temporarily supplying the heating medium to the condenser which functioned as a cooling source, it is possible to melt the frozen component in a short time.

Here, for the cooling medium and the heating medium, one material out of water, ethanol, ethylene glycol, propylene glycol, chlorofluorocarbons, hydrochlorofluorocarbons, and hydrofluorocarbons, or a mixture thereof can be used, but the cooling medium and the heating medium are not particularly limited to these. The heating medium means a medium at a higher temperature than the cooling medium. The cooling medium and heating medium should preferably be liquids. In the case in which the cooling medium and the heating medium are stored in their respective tanks, switching from the condensation process to the melting process and switching from the melting process to the condensation process can be smooth and made in a short time.

Pipe lines L6 and L7 are connected to condensation recovery device 20. Pipe line L6 is a pipe line for supplying the carrier gas discharged from adsorption/desorption processing device 10 to condenser 21. Pipe line L7 is a pipe line for discharging the carrier gas from condenser 21.

In addition, pipe line L9 is connected to condenser 21. Pipe line L9 is a pipe line for introducing the organic solvent and trace water condensed by condenser 21 to recovery tank 22.

Further, pipe lines L10 and L11 are connected to condenser 21. Pipe line L10 is a pipe line for supplying the cooling medium or the heating medium from cooling-medium/heating-medium supply unit 23 to condenser 21. Pipe line L11 is a pipe line for releasing the cooling medium or the heating medium from condenser 21 to the outside. In the present embodiment, pipe line L11 is connected to cooling-medium/heating-medium supply unit 23, and the cooling medium or heating medium is used so as to circulate. By circulating the cooling medium or the heating medium, it is possible to recover heat and to operate condensation recovery device 20 with less energy.

Cooling entrance channel L12 is provided on circulation channel L1 for connecting a branch point provided on pipe line L4 and a branch point provided on pipe line L6. The state of connection/non-connection of the cooling entrance channel L12 to pipe lines L4 and L6 is switched by a valve V9. The branch point of cooling entrance channel L12 and pipe line L4 is located downstream of condensation recovery device 20 and upstream of heater 30, and the branch point of cooling entrance channel L12 and pipe line L6 is located downstream of adsorption/desorption processing device 10 and upstream of condensation recovery device 20.

Further, on circulation channel L1, cooling exit channel L13 is provided for connecting a branch point provided on pipe line L5 and a branch point provided on pipe line L6. The state of connection/non-connection of cooling exit channel L13 to pipe lines L5 and L6 is switched by a valve V11. The branch point of cooling entrance channel L13 and pipe line L5 is located downstream of heater 30 and upstream of adsorption/desorption processing device 10, and the branch point of cooling entrance channel L13 and pipe line L6 is located downstream of the branch point of cooling entrance channel L12 and pipe line L6 and upstream of condensation recovery device 20.

A valve V10 is provided between the branch point of pipe line L4 and cooling entrance channel L12 and the branch point of pipe line L5 and cooling exit channel L13, and the state of connection/non-connection between the branch point of pipe line L4 and cooling entrance channel L12 and the branch point of pipe line L5 and cooling exit channel L13 is switched by valve V10.

A valve V12 is provided between the branch point of pipe line L6 and cooling entrance channel L12 and the branch point of pipe line L6 and cooling exit channel L13, and the state of connection/non-connection between branch point of pipe line L6 and cooling entrance channel L12 and the branch point of pipe line L6 and cooling exit channel L13 is switched by valve V12.

The carrier gas is supplied to either adsorption/desorption tank A 11 or adsorption/desorption tank B 12 in a high temperature state or in a low temperature state temporally alternately by operating opening/closing of foregoing valves V9 to V12. More specifically, in the state in which valves V10 and V12 are open, and valves V9 and V11 are closed, the carrier gas is supplied to either adsorption/desorption tank A 11 or adsorption/desorption tank B 12 via heater 30 in a high temperature state. In the state in which valves V9 and V11 are open, and valves V10 and V12 are closed, the carrier gas is supplied to either adsorption/desorption tank A 11 or adsorption/desorption tank B 12 via cooling entrance channel L12 in a low temperature state.

As can be seen from the above, the treatment target gas, the carrier gas at high temperature, and the carrier gas at low temperature are temporally sequentially supplied to each of adsorption/desorption tank A 11 and adsorption/desorption tank B 12 by operating opening/closing of foregoing valves V1 to V8. With this operation, adsorption/desorption tank A 11 and adsorption/desorption tank B 12 function as an adsorption tank and a desorption tank temporally sequentially, and along with this operation, the organic solvent and trace water transfer from the treatment target gas to the carrier gas at high temperature. Note that specifically, while adsorption/desorption tank A 11 is functioning as an adsorption tank, adsorption/desorption tank B 12 functions as a desorption tank, and while adsorption/desorption tank A 11 is functioning as a desorption tank, adsorption/desorption tank B 12 functions as an adsorption tank.

Here, since the carrier gas heated by heater 30 and the carrier gas from the cooling entrance channel come in contact with adsorption/desorption element A 13 or adsorption/desorption element B 14 in counter-flow directions, desorption by heating adsorption/desorption element A 13 or adsorption/desorption element B 14 and cooling of adsorption/desorption element A 13 or adsorption/desorption element B 14 can be performed effectively.

Fig. 2 is a time chart illustrating a temporal switching of the adsorption process and the desorption process using adsorption/desorption element A 13 and adsorption/desorption element B 14 in the organic solvent recovery system 100A illustrated in Fig. 1. Next, with reference to this Fig. 2, details of processing of the treatment target gas using the organic solvent recovery system 100A in the present embodiment will be described based on an example in which an inert gas is used as the carrier gas.

The organic solvent recovery system 100A is capable of continuously processing the treatment target gas by repeating the one cycle shown in Fig. 2 as a unit period.

In the first half of the above one cycle (between time t0 and time t3 shown in Fig. 2), the adsorption process is performed in adsorption/desorption tank A 11 charged with adsorption/desorption element A 13. In parallel with this, a purge process (between time t0 and time t1 shown in Fig. 2) for replacing the content inside adsorption/desorption tank B 12 with the inert gas is performed in adsorption/desorption tank B 12 charged with adsorption/desorption element B 14. After that, a desorption process (between time t1 and time t2 shown in Fig. 2) is performed. After that, a cooling process (between time t2 and time t3 shown in Fig. 2) is performed for cooling adsorption/desorption element B 14. The inert gas used in the purge process is the same as the carrier gas. It is preferable to arrange piping such that the downstream side of adsorption/desorption tank B 12 in the purge process is connected to the upstream side of treatment-target-gas blower 40 so that the treatment target gas (the gas that had remained in adsorption/desorption tank B 12) discharged by being replaced with the inert gas can be supplied together with the treatment target gas to adsorption/desorption tank A 11 which is performing an adsorption process. This is because piping with which the treatment target gas discharged by the replacement is supplied again to the adsorption process increases the recovery rate of organic solvents. The present embodiment is assumed to have a configuration (not illustrated) in which the downstream side of the adsorption/desorption tank in the purge process is connected to the upstream side of treatment-target-gas blower 40 and is not connected to condenser 21 side. This switching of the connection/non-connection states can also be made by the valves.

In the last half of the above one cycle (between time t3 to time t6 shown in Fig. 2), the adsorption process is performed in adsorption/desorption tank B 12 charged with adsorption/desorption element B 14. In parallel with this, a purge process (between time t3 and time t4 shown in Fig. 2) for replacing the content inside adsorption/desorption tank A 11 with the inert gas is performed in adsorption/desorption tank A 11 charged with adsorption/desorption element A 13. After that, a desorption process (between time t4 and time t5 shown in Fig. 2) is performed. After that, a cooling process (between time t5 and time t6 shown in Fig. 2) for adsorption/desorption element A 13 is performed.

In condensation recovery device 20, the condensation process (between time t0 to time t2 shown in Fig. 2) is performed in which the carrier gas including the organic solvent and trace water and discharged from adsorption/desorption processing device 10 by supplying the cooling medium from cooling-medium/heating-medium supply unit 23 is indirectly cooled in condenser 21, and the temperature of the carrier gas is adjusted to a low temperature state to condense the organic solvent, and thus the organic solvent and trace water are recovered.

Condensation recovery device 20 may include a vapor-pressure measurement unit (not illustrated) that measures the vapor pressure of the organic solvent contained in the carrier gas discharged from condenser 21 and a temperature adjustment unit (not illustrated) that adjusts the temperature of condenser 21 such that the vapor pressure of the organic solvent measured by this vapor-pressure measurement unit is no more than a specified value. Adjustment of the temperature of the condenser makes it possible to make the concentration of the organic solvent in the discharged carrier gas no more than a specified level, making it possible to efficiently desorb the organic solvent adsorbed by adsorption/desorption element A 13 and adsorption/desorption element B 14.

The adjustment of the temperature of the carrier gas can be controlled by the amount or the temperature of the cooling medium from cooling-medium/heating-medium supply unit 23. Specifically, data on the relationship between the temperature and the vapor pressure is obtained and held, and the temperature of the carrier gas is adjusted by the cooling medium so that the vapor pressure is at a desired level. Note that the relationship between the temperature and the vapor pressure varies depending on the kind of organic solvent, but it can be obtained from literature or the like. The vapor pressure of an organic solvent can be measured with a VOC concentration meter, a gas chromatography, or the like.

In the case in which condensation recovery device 20 adjusts the temperature of the carrier gas such that the vapor pressure of the organic solvent contained in the carrier gas discharged from condenser 21 is no more than a specified value, this eliminates, for example, a need to have an adsorption/desorption element between condenser 21 and adsorption/desorption processing device 10 for adsorbing and removing the organic solvent in the carrier gas, and thus, it is possible to make the configuration of the organic solvent recovery system 100A simple and reduce its size.

In the cooling process (time t2 to time t3 shown in Fig. 2), the carrier gas is introduced to adsorption/desorption tank B 12 via cooling entrance channel L12 to cool adsorption/desorption element B 14. If adsorption/desorption element B 14 is not sufficiently cooled, the temperature of adsorption/desorption element B 14 is high in the adsorption process (time t4 to time t6 shown in Fig. 2) in adsorption/desorption tank B 12, and it is difficult to sufficiently adsorb the organic solvent, making the performance of the system low. Similarly, in the cooling process (time t5 to time t6 shown in Fig. 2) for adsorption/desorption element A 13, the carrier gas is introduced to adsorption/desorption tank A 11 via cooling entrance channel L12.

In the cooling process (time t2 to time t3 shown in Fig. 2), the carrier gas discharged from adsorption/desorption tank B 12 passes through cooling exit channel L13, merges with the carrier gas flowing through pipe line L6, and is supplied to condensation recovery device 20. The carrier gas discharged from adsorption/desorption tank B 12 contains a large amount of organic solvent, and the organic solvent is recovered by condensation recovery device 20. Similarly in the cooling process (time t5 to time t6 shown in Fig. 2) for adsorption/desorption element A 13, the carrier gas discharged from adsorption/desorption tank A 11 passes through cooling exit channel L13, merges with the carrier gas flowing through pipe line L6, and is supplied to condensation recovery device 20

In the case in which condensation recovery device 20 adjusts the temperature of the carrier gas such that the vapor pressure of the organic solvent contained in the carrier gas discharged from condenser 21 is no more than a specified value, the temperature of the carrier gas needs to be adjusted to no more than 0°C depending on the type of organic solvent. Thus, the organic solvent and trace water contained in the carrier gas coagulates in condenser 21, blocking the flow channel of the carrier gas. The gas flow resistance of condenser 21 rises, and the carrier gas cannot flow. Thus, the melting process (between time t2 to time t4 shown in Fig. 2) is performed in cooling-medium/heating-medium supply unit 23 by switching from cooling-medium supply to heating-medium supply to indirectly heat and melt the coagulated organic solvent and trace water so that the flow channel in condenser 21 is not blocked. The melted organic solvent and trace water pass through pipe line L9 and are discharged to recovery tank 22.

In the melting process of condenser 21, it is preferable that valves V9 and V12 be open, that valves V10 and V11 be closed, and that the carrier gas be supplied to condenser 21 via cooling entrance channel L12. This is because supplying the carrier gas to condenser 21 during the melting process makes it easy for the melted organic solvent and trace water to move to pipe line L9, and they can be efficiently recovered in a liquefied state. It is preferable to supply the carrier gas to condenser 21 to perform the melting process during the purge process in which adsorption/desorption element A 13 or adsorption/desorption element B 14 does not perform a desorption process. As described above, in the present embodiment, adsorption/desorption tank 12 in the purge process is not connected to condenser 21 and instead connected to the upstream side of treatment-target-gas blower 50, and thus, the treatment target gas (the gas that had remained in adsorption/desorption tank B 12) replaced with the inert gas and discharged during the purge process is not supplied to condenser 21.

In condensation recovery device 20, the melting continues until the organic solvent and trace water in condenser 21 are completely melted. At the time point when the organic solvent and trace water are completely melted, cooling-medium/heating-medium supply unit 23 switches from heating-medium supply to cooling-medium supply. With this, condenser 21 indirectly cools the carrier gas to perform again the condensation process (between time t4 and time t6 shown in Fig. 2) in which the temperature of the carrier gas is adjusted to a low temperature state to condense the organic solvent and trace water.

Here, although Fig. 2 shows an example in which the melting process is performed between time t2 and time t4, the melting process in condenser 21 does not need to be performed in every cycle. It may be performed regularly or irregularly. The period of the melting process does not have to be limited to the period from the cooling process in adsorption/desorption element B 14 to the purge process in adsorption/desorption element A 13 as shown in Fig. 2, but the melting process may be performed in the period from the cooling process in adsorption/desorption element A 13 to the purge process in adsorption/desorption element B 14.

In the case in which the melting process cannot be completed in the period from the cooling process to the purge process in adsorption/desorption element A 13 or adsorption/desorption element B 14, it is possible to have a configuration in which two or more condensers are provided, and while one of the condensers continues the melting process, the other condenser performs the condensation process. In this case, a configuration in which the condenser that performs the melting process and the condenser that performs the condensation process are switched by valve operation and like configurations are conceivable, and the configuration is not particularly limited to this example.

As another method for performing the melting process in condenser 21, a method in which, for example, a heated gas is supplied into condenser 21 to heat the coagulated organic solvent and trace component and like methods are conceivable. However, this method needs to make the entire inside of condenser 21 be at high temperature, requiring a huge amount of energy, and in addition, this method requires a long time until melting is completed. Since coagulation of the organic solvent and trace component is concentrated on the coil in which the cooling medium passes, applying the method as in the present embodiment for making only the coil in condenser 21 at high temperature by using the heating medium can minimize the energy necessary for the melting process, and the melting can be completed in a short time. Thus, it is possible to achieve the system with one condenser.

Here, if the system includes a static pressure difference measurement unit (not illustrated) that measures a difference between static pressure of the carrier gas at the inlet of condenser 21 and static pressure of the carrier gas at the outlet of condenser 21, and at the time point when the difference in the static pressure reaches no less than a specified value, the foregoing condensation process is switched to the foregoing melting process, rise of the gas flow resistance of condenser 21 can always be prevented. Since the above configuration makes it possible to detect a problem in the gas flow due to adhesion of a frozen component by using measurement results of the static pressure difference measurement unit, it is possible to automatically heat and melt the frozen component by switching to the melting process (heating medium supply). Here, the "specified value" is determined, considering that the pressure loss (pressure difference) in condenser 21 to the degree that the volume of air supplied by the circulation blower 40 is not significantly low is a limit value. The correlation between the pressure loss in condenser 21 and the decrease in the volume of air supplied by the circulation blower 40 is determined by the discharge pressure capacity of the circulation blower 40. The static pressure difference can be measured by using a pressure gauge as means for measuring the difference in the static pressure, connecting the positive-pressure measurement port of the pressure gauge to the inlet (on the L6 side) of condenser 21, and connecting the negative-pressure measurement port to the outlet (on the L7 side) of condenser 21.

Alternatively, if the concentration of the organic solvent contained in the treatment target gas and the concentration of water can be known in advance, a configuration is possible in which the data on those concentrations is obtained and held, and the condensation process and the melting process are switched at constant intervals in cooling-medium/heating-medium supply unit 23.

Here, in the case in which activated carbon fiber is used for adsorption/desorption element A 12 and adsorption/desorption element B 14, the adsorption/desorption elements adsorb almost no water contained in the treatment target gas, and the amount of water contained in the carrier gas supplied to condenser 21 is extremely small. Thus, the amount of water coagulated in condenser 21 is extremely small, and the frequency at which condenser 21 performs the melting process can be very low. This reduces much energy used for the melting process, and it is possible to make the configuration of the organic solvent recovery system 100A further simpler.

Use of the organic solvent recovery system 100A according to the present embodiment described above can eliminate the problem in the gas flow due to adhesion of the frozen component because condenser 21 to which the heating medium is given temporarily heats and melts the component frozen in the condensation process that cools the carrier gas. Thus, the organic solvent recovery system 100A can cool the carrier gas at a lower temperature than conventional systems, and it is possible to increase the efficiency in condensation recovery of the organic solvent. In addition, this decreases the concentration of the organic solvent in the carrier gas discharged from condensation recovery device 20 and increases the efficiency in desorption of the carrier gas in the adsorption processing device, and this eliminates the need for having another second adsorption/desorption processing device downstream of condensation recovery device 20. Further, after the treatment target gas is introduced to perform adsorption with adsorption/desorption element A 13 or adsorption/desorption element B 14, the heated carrier gas is introduced to adsorption/desorption element A 13 or adsorption/desorption element B 14 to perform desorption. After that, the carrier gas is introduced through cooling entrance channel L12 to cool adsorption/desorption element A 13 or adsorption/desorption element B 14, and after that, the treatment target gas is introduced again to perform adsorption with adsorption/desorption element A 13 or adsorption/desorption element B 14. Thus, since introduction of the carrier gas through cooling entrance channel L12 cools heated adsorption/desorption element A 13 or adsorption/desorption element B 14, the adsorption in adsorption/desorption element A 13 or adsorption/desorption element B 14 can adsorb the organic solvent in the treatment target gas efficiently, improving the cleaning performance for the treatment target gas.

Thus, the use of the organic solvent recovery system 100A reduces the running cost and, at the same time, improves the cleaning performance for the treatment target gas and the recovery efficiency for the organic solvent. This makes it possible to achieve a system having a higher performance and a simpler configuration than conventional ones.

In addition, the organic solvent recovery system 100A of the present embodiment has a circulation channel and can use the carrier gas repeatedly, and thus it is also excellent in economic efficiency. The effects of reduction in the running cost can be obtained, in particular, in the case in which an inert gas typified by nitrogen gas or the like is used as the carrier gas.

Moreover, if the system has a heat exchanger (not illustrated) that can perform heat exchange between the carrier gas discharged from adsorption/desorption tank A 11 and adsorption/desorption tank B 12 and the carrier gas discharged from condensation recovery device 20 in the desorption process, it is possible to reduce both the amount of cooling medium necessary for the condensation process of condensation recovery device 20 and the thermal energy necessary for heater 30, making it possible to achieve a configuration more excellent in economic efficiency.

The embodiments disclosed above are examples in all respects and not intended to be restrictive. The technical scope of the present invention is defined by the claims, and it is intended to include all modifications within the scope of the claims and the equivalents.

### INDUSTRIAL APPLICABILITY

The present invention can be effectively utilized, for example, in systems that process treatment target gases containing organic solvents discharged from factories or buildings and other systems.

### REFERENCE SIGNS LIST

- 10: adsorption/desorption processing device
- 11: adsorption/desorption tank A
- 12: adsorption/desorption tank B
- 13: adsorption/desorption element A
- 14: adsorption/desorption element B
- 20: condensation recovery device
- 21: condenser (melting unit, cooling unit, cooling melting unit)
- 22: recovery tank
- 23: cooling-medium/heating-medium supply unit (cooling-medium heating-medium supply unit)
- 30: heater (heating unit)
- 40: circulation blower
- 50: treatment-target-gas blower
- 100A: organic solvent recovery system
- L1: circulation channel
- L2 to L11: pipe line
- L12: cooling entrance channel
- L13: cooling exit channel
- V1 to V12: valve

## Claims

1. An organic solvent recovery system that, from a treatment target gas containing an organic solvent, separates and recovers the organic solvent, the organic solvent recovery system comprising:
a circulation channel through which a carrier gas circulates and flows;
an adsorption/desorption processing device that is provided on the circulation channel, has an adsorption/desorption element, and performs adsorption of the organic solvent and desorption of the organic solvent alternately, the adsorption of the organic solvent being performed by introducing the treatment target gas to the adsorption/desorption processing device, the desorption of the organic solvent being performed by introducing the carrier gas to the adsorption/desorption processing device;
a condensation recovery device that is provided downstream of the adsorption/desorption processing device on the circulation channel, includes a cooling unit configured to cool the carrier gas discharged from the adsorption/desorption processing device, and condenses the organic solvent in the carrier gas in the cooling unit to recover the organic solvent as a condensed liquid;
a heating unit that is provided upstream of the adsorption/desorption processing device on the circulation channel and heats the carrier gas at low temperature discharged from the condensation recovery device; and
a cooling entrance channel that is provided on the circulation channel and introduces the carrier gas at low temperature discharged from the condensation recovery device to the adsorption/desorption element not via the heating unit, wherein
the adsorption/desorption processing device, after introducing the treatment target gas to the adsorption element, introduces the carrier gas heated by the heating unit to the adsorption element, after that, introduces the carrier gas at low temperature from the cooling entrance channel to the adsorption element, and after that, again introduces the treatment target gas to the adsorption element, and
the condensation recovery device includes a melting unit that temporarily heats and melts a component frozen by cooling of the carrier gas.

2. The organic solvent recovery system according to claim 1, wherein
the condensation recovery device includes a cooling-medium heating-medium supply unit that selectively supplies a cooling medium or a heating medium, and
the cooling unit and the melting unit are configured as one cooling melting unit, and when the cooling melting unit is supplied with the cooling medium from the cooling-medium heating-medium supply unit, the cooling melting unit functions as the cooling unit, and when the cooling melting unit is supplied with the heating medium from the cooling-medium heating-medium supply unit, the cooling melting unit functions as the melting unit.

3. The organic solvent recovery system according to claim 2, comprising
a static pressure difference measurement unit that measures a difference in static pressure of the carrier gas between at an inlet side and at an outlet side of the condensation recovery device, wherein
the cooling-medium heating-medium supply unit, when the difference in the static pressure measured by the static pressure measurement unit exceeds a specified value, selects supplying of the heating medium.

4. The organic solvent recovery system according to any one of claims 1 to 3, comprising:
a vapor-pressure measurement unit that measures vapor pressure of the organic solvent contained in the carrier gas discharged from the condensation recovery device; and
a temperature adjustment unit that adjusts temperature of the cooling unit such that the vapor pressure of the organic solvent measured by the vapor-pressure measurement unit is no more than a specified value.

5. The organic solvent recovery system according to any one of claims 1 to 4, wherein
while the melting unit is performing the melting, the carrier gas is passed through the cooling entrance channel not via the heating unit and supplied to the condensation recovery device.

6. The organic solvent recovery system according to any one of claims 1 to 5, wherein
the adsorption/desorption processing device performs a purge process on the adsorption/desorption element after the adsorption and before the desorption, and
the melting unit performs the melting during a period of the purge process.

7. The organic solvent recovery system according to any one of claims 1 to 6, wherein
the carrier gas heated by the heating unit and the carrier gas from the cooling entrance channel come in contact with the adsorption/desorption element in counter-flow directions.
